# EUROPEAN PATENT APPLICATION

(11) **EP 2 808 185 A1**
(43) Date of publication of application: **03.12.2014**
(21) Application number: 13169813.6
(22) Date of filing: 29.05.2013
(51) Int. Cl.: B60D 1/173, B60D 1/30

(54) **Improved trailer coupling and method of hitching a trailer to a vehicle**

(71) Applicant: BRADLEY DOUBLELOCK LIMITED, West Yorkshire. BD16 2NH (GB)
(72) Inventor: Rodbard, Jeffrey William, Isle of Wight, Hampshire PO38 1QB (GB)
(74) Representative: Misselbrook, Paul

(57) **Abstract**

The invention relates to a system of connecting a centre axle trailer to a tow vehicle in a manner that causes the effective pivotal point to be forward of the actual main tow hitch point when small angles of turn are made, in order to increase stability of the assembly. A main link to a central tow hitch is caused to rotate as required using a second offset link between trailer and tow vehicle, thus producing the required lateral displacement of the trailer over this range of turn angles. Provision is also made to enable the complete assembly to tolerate large angles of vehicle turn by automatically changing the mode of operation for these larger angles, so that the two linkages between tow vehicle and trailer lock in position, and the trailer pivot point changes to a point in the centre of the trailer mechanism.

## Description

The present invention relates to an improved trailer coupling and method of hitching a trailer to a tow vehicle, and in particular, to an improved trailer coupling that improves the stability of the tow vehicle and trailer when the trailer coupling is coupled to a tow hitch of the tow vehicle.

In this specification the term trailer is used to denote a wheeled structure which can be towed behind a vehicle, and is directionally controlled by the direction of travel of the tow vehicle. A specific example would be a caravan for instance. The tow vehicle has a trailer hitch mounted at the centre of the rear end of the vehicle to which the trailer coupling is attached. Typical trailer hitches are towing balls to which a trailer coupling is attached to allow rotation about all three axis of movement. Typically the rotation is referred to as pitch about the sideways axis, roll about the front-to-back axis and yaw about the vertical axis and that terminology is used throughout. The invention relates to the operation of a mechanical device built in to a trailer coupling to enhance towing stability, in particular for prevention of oscillation known as snaking.

When a centre-axle moving trailer is disturbed rotationally about a vertical axis, such as by airstream from an overtaking vehicle or any other force that causes a swing in alignment between tow vehicle and trailer, some lateral force is applied to the tow vehicle hitch. If the tow hitch is substantially behind the rear axle of the tow vehicle and a substantial force is applied to it in one direction, this will cause the tow vehicle to deviate in the opposite direction. This can cause the trailer to over-respond with a swing in this opposite direction, which in turn can cause a subsequent reversal of directional deviation to the tow vehicle, and thus build up an increasing oscillation known as snaking. The propensity to which this may occur is primarily dependent on speed, the weight and moment of inertia of the trailer, the length of overhand from vehicle back axle to the hitch point and also the weight and suspension stability of the tow vehicle. Applying the vehicle brakes when snaking occurs can exacerbate the condition.

The effect can be reduced to some extent by adding friction to angular movement at the hitch point. This is commonly achieved either by use of a friction pad of an accessory unit that connects between the vehicle towbar mounting and the trailer chassis, or by application of a strong clamping force on the ball-hitch of the tow vehicle. Although both methods do delay the onset of snaking, it is not prevented at higher speeds or loads, and it can still occur very suddenly without warning.

It is generally assumed that snaking is caused simply by towing a total trailer weight too high for the vehicle and that if this weight is kept below the maximum figure recommended in the vehicle handbook, then stable towing performance is assured. Unfortunately this is not the case, as the recommended maximum towable weight given in the handbook of any particular vehicle is usually derived from the maximum weight that the vehicle can commence to tow up a steep hill, regardless of trailer inertia or trailer length. This error can be disastrously misleading to the user, as popular four wheel drive passenger cars and four wheel drive utility vehicles designed for road and / or off-road use are commonly specified as capable of towing 3500KG simply because they have a very low bottom gear, and many catastrophic accidents are caused by the mistaken assumption that these vehicles can safely tow any trailer up to this weight at 60 mph on motorways, which is the legal limit in the UK at present.

Apart from caution regarding maximum speed, an effective reduction in the tendency to snake is obtained if the tow-hitch overhang dimension referred to above is kept to a minimum by making the hitch connection very near to the rear axle of the tow vehicle, thus ensuring that any lateral force applied to the tow hitch will not cause appreciable change of direction of the tow vehicle. This arrangement is now common on some heavy goods vehicles, where the hitch connection is made on or very near to at the rear axle, and has been shown to be highly effective. However because it is impractical to do this on an existing car, an alternative is to use a linkage that causes a trailer to act in this way, although no actual connection is physically made on the rear axle.

Conventional devices to achieve an effective pivot point close to the rear axle do not directly connect a rigid towbar on the trailer to a tow hitch at the rear of the tow vehicle, but use instead two links from tow vehicle to trailer, each pivoted at both ends, and where the distance between the two connection points on the tow vehicle are closer together then the corresponding connections on the trailer. This forms a trapezium configuration and creates an effective pivot point at the intersection of the two links. For small angles of turn this causes the trailer to move laterally to keep its centre line approximately aligned with the centre of the rear axle of the tow vehicle, rather than to pivot about the ball hitch point. Because the trailer then acts as if it is connected to a point close to the back axle of the tow vehicle, any lateral force applied to the tow vehicle from the trailer will not appreciably affect the direction of travel of the tow vehicle and thus cause snaking to occur. These two linkages are normally of identical length and arranged symmetrically either side from the centre line of the trailer.

Trapezium linkage arrangements can suffer from some or all of the following disadvantages;
1. Loss of ability to tolerate 90 degree angle of tow vehicle to trailer.
2. complication caused by the requirement to support some possible downthrust from the trailer on to the hitch, yet also tolerate some rolling and pitching movement of the tow vehicle relative to the trailer.
3. Over-run braking system adversely affected.
4. Complication of procedure when disconnection or re-connection is required.
5. Use of special towbar unable to tow standard trailers.

It is an object of the present invention to attempt to overcome at least one of the above or other disadvantages. It is a further aim to provide a trailer hitch having an effective pivot point forward on the tow vehicle than the actual connection whilst reducing the hitch complexity and improving the hitch operation.

According to the present invention there is provided an improved trailer coupling and method of hitching a trailer to a tow vehicle as set forth in the appended claims. Other features of the invention will be apparent from the dependent claims, and the description which follows.

In the exemplary embodiments a towing system comprises a tow vehicle having a tow hitch and a trailer having a trailer coupling. The trailer coupling couples to the tow hitch. The trailer coupling has a first link and a second link. The first link is coupled to the tow hitch at a centre of the tow vehicle and to the centre of the trailer by first and second respective connections. The second link is coupled to the tow hitch and trailer offset from the first link by third and fourth respective connections. The first and third connections to the trailer hitch are spaced closer to each other than the second and forth connections to the trailer. Advantageously, because the first link is coupled along the centre line of the vehicle, at least one of the first and second couplings of the first link can be rigid about the pitch axis. This removes the need for complicated arrangements to counteract the downthrust from a nose of the trailer.

In one exemplary embodiment, the first or main link connected to the trailer and tow vehicle centrally, pivots at the trailer end about a vertical axis only, thus enabling support of any nose weight of the trailer on the main tow-hitch. Roll and pitch of the trailer relative to the tow vehicle is achieved via a three-axis joint, such as a ball joint at the tow vehicle. It will be appreciated that without mounting the first link centrally, all four connections are required to have three degrees of rotation, and the nose weight of the trailer must therefore be countered using further mechanisms. The second link or offset link is provided, which is arranged to one side and of greater length than the central link. In the preferred embodiments both ends of this offset link use ball joints so that they can pivot in all directions. By this means any normal rolling movements between tow vehicle and trailer can be accommodated.

The towing system of the exemplary embodiments achieves the improved stability by creating an effective pivot between the trailer and tow vehicle forward of the actual tow hitch. The effective pivot is formed at the intersection of two lines drawn through the first and second connections and the third and fourth connections respectively. By altering the spacing of the first and third connection and / or the spacing of the second and fourth connection, the effective pivot point can be altered. It has been found that sufficient stability is achieved by arrangeing the effective pivot at or around the rear axle, though in other embodiments, the effective pivot is brought further forwards still and towards the centre of gravity of the tow vehicle. Although this is an asymmetric arrangement the effect for turns of opposite directions is very similar to that of a symmetrical trapezium linkage, and such differences as there are have little effect. As a turn angle is developed between tow vehicle and trailer, the centre line of the trailer is offset from the centre line of the tow vehicle such that the assembly acts as if the hitch point is further forward of the actual hitch point, thus achieving the resistance to snaking as required.

In the exemplary embodiments, the tow hitch is preferably a standard tow ball. That is, the first connection between the tow hitch and trailer connection takes the form of a standard coupling which decreases complexity and increases ease of use for users used to hitching standard connections. The third connection between the offset link and tow hitch may be a second tow ball coupled to the tow vehicle. Alternatively, this second ball hitch can be either directly mounted on the towbar, or be part of a removable arm that can be inserted in the socket fitting of the towbar normally used for attaching a friction type stabiliser. In this case the offset link may incorporate means of limiting the force it can apply from tow vehicle to trailer.

In a further exemplary embodiment of a trailer coupling having a first and second link, wherein the first link may be centrally mounted or symmetrically mounted about the centre line with the second link, at least the fourth connection between the second link and trailer is arranged so as to be held fast to the trailer for small angles of turn, that is, whilst the relative angle between the longitudinal centre line of the tow vehicle and the longitudinal centre line of the trailer is between zero and a first angle, and when the relative angle increase above the first angle, the fourth connection is arranged so as to be moveable relative to the trailer.

Advantageously, this allows the trailer end of the offset linkage to be effectively fixed relative to the trailer during small turning angles, as in this mode the arm to which it is attached is unable to move. In conventional trapezium type, 4-link couplings, as the turn angle further increases the simple trapezium linkage rapidly reaches a critical configuration which limits the maximum permissible turn angle. Advantageously however, in the exemplary embodiments a mechanical system is used to control movement of the trailer end of the offset link by mounting this on an arm which operates in two distinct modes according to the turn angle of the main central link.

For small angles of turn this arm is unable to move, so the trailer end of the offset link is effectively fixed to the trailer, but for larger angles of turn the projecting arm is enabled to move in a rotational manner but only together with and couple to the central link. By this means, for small angles of turn the system acts as a simple but asymmetric trapezium linkage mode as described wherein the effective pivot point remains forward of the actual connection, where both linkage points to the trailer remain fixed, but as a predetermined angle of turn is reached, the second mode of operation comes into effect regarding the connection point of the link to the projecting arm described. Because this arm ceases at this point to be fixed and is instead then coupled to the main central link, the pivot point of the trailer then becomes the main pivot of the described mechanism on the trailer, thus enabling steep turns to be achieved as shown in the accompanying diagrams. In this mode the configuration of the linkages to the tow vehicle is held constant.

In the exemplary embodiments, the central link is connected to the trailer at the second connection. A third link such as a plate is provided. The second, offset link in connected by the fourth connection to the third link. The third link is arranged to be selectively coupled fast to either the trailer or the first, central link dependent on the rotation angle between the tow vehicle and trailer. In the exemplary embodiments, the selective coupling is achieved by a selective coupling means. The selective coupling means fixes the third link to the trailer until the tow vehicle and trailer form an angle greater than a pre-set angle at which point, the selective coupling means decouples from being held fast to the trailer and is free to rotate about the second connection. Here selective driving means is provided on the first, central link to cause the first link to rotate the third link.

In an exemplary embodiment, the selective coupling means comprise followers on the third link. The followers abut a plate of the trailer until the angle of rotation exceed the pre-set angle. At this point, the third link is caused to move laterally relative to the vehicle so that the followers no longer abut the vehicle and allow rotation. Further, the selective driving means comprises a follower that cooperates with a slot between the third link and first link. Here, the follower and slot are shaped so that the follower can move within the slot whilst the angle between the tow vehicle and trailer is below the pre-set angle. At the pre-set angle, the follower abuts the channel so that third link is caused to move relative to the trailer, which releases the selective coupling means. Further rotation of the first link cause rotation of the third link by abutment between the follower and slot of the selective driving means.

To allow for a trailer braking system that operates from force exerted on the tow vehicle by the trailer, the whole mechanical assembly can be mounted on the trailer in a manner that permits some longitudinal movement, and this movement used to operate the trailer brakes.

At least one of the first to fourth connections is preferably a coupling so that the trailer part and the tow vehicle part can be decoupled to decouple the trailer from the tow vehicle. In the exemplary embodiments at least the second and fourth connections are permanent joints that are not designed to be readily decoupled during normal use. Typically, the first connection is a coupling designed to be readily decoupled in use. The third connection may be either a coupling or a joint designed to be readily decoupled or relatively permanent respectively during use. When the third connection is a joint, the connection should be otherwise detachable from the tow vehicle.

The exemplary embodiments are described in relation to a towing system comprising a tow vehicle and trailer. However, it will be appreciated that a hitch assembly comprising a tow hitch and trailer coupling for retrospective attachment to a tow vehicle and trailer is also envisaged, as is a trailer coupling suitable for coupling to a tow hitch. Likewise a tow hitch for coupling to a trailer coupling is equally envisaged where these parts are sold, manufactured or imported separately.

For a better understanding of the invention, and to show how embodiments of the same may be carried into effect, reference will now be made, by way of example, to the accompanying diagrammatic drawings in which:
Figure 1 illustrates a simplified plan view of a towing system, where travel is straight ahead;
Figure 2 illustrates a plan view of the response of the towing system of Figure 1 to a small angle of turn of the tow vehicle;
Figure 3 illustrates a plan view of the response of the towing system of Figure 1 to larger angles of turn of the tow vehicle;
Figure 4 illustrates a simplified and exploded perspective view of the elements of a suitable trailer coupling for use in the tow system of Figure 1;
Fig 5 illustrates a possible configuration of one plate of Figure 4;
Fig 6 illustrates a form of another plate of Figure 4; and
Fig 7 illustrates a typical configuration of a yet further plate of Figure 4.

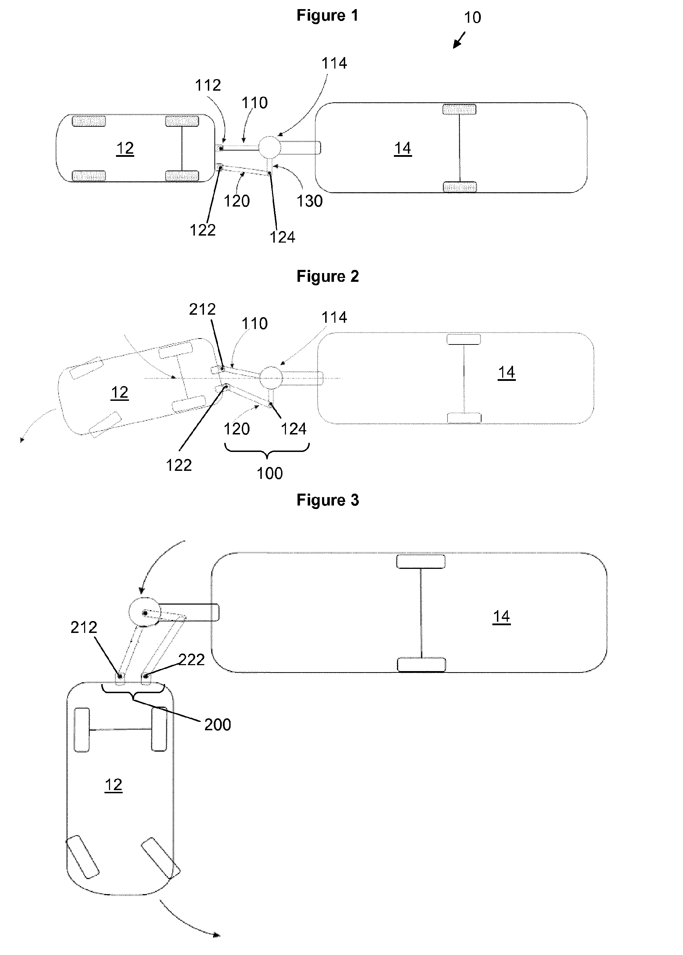

Referring to Figure 1 there is shown a towing system 10 comprising a tow vehicle 12 having a tow hitch 200 and a trailer 14 having a trailer coupling 100. The trailer 14 and tow vehicle 10 are standard and can have any known form. A detailed description is not thought necessary, but the tow vehicle generally has four wheels that support a chassis having a rear end to which the tow hitch can be coupled. The trailer has a set of wheels that support a chassis having a front end to which the trailer coupling 100 is attached. The trailer coupling 100 couples to the tow hitch 200 so that the trailer is pulled by the tow vehicle via the coupling of the tow hitch 200 and trailer coupling 100.

The trailer coupling 100 has a first link 110 and a second link 120. The first link 110 is coupled to the tow hitch 200 at a centre of the tow vehicle 12 and to the centre of the trailer 14 by first 112 and second 114 respective connections. The second link 120 is coupled to the tow hitch 100 and trailer 14 offset from the first link 110 by third 122 and fourth 114 respective connections. The first 112 and third 122 connections to the trailer hitch 200 are spaced closer to each other than the second 114 and forth 124 connections to the trailer 14. Advantageously, because the first link 110 is coupled along the centre line of the vehicle 12, at least one of the first 112 and second 114 couplings of the first link 100 can be rigid about the pitch axis. This removes the need for complicated arrangements to counteract the downthrust from a nose of the trailer. That is, in conventional trapezium stabilisers, each of the four connections must provide the full three-axis range of movement to accommodate different pitch, roll, and yaw of the tow vehicle to the trailer. This requires an additional means to prevent the nose of the trailer from dropping under gravity. By mounting the first link 110 on the central axis of the tow vehicle and trailer, the need for this additional means is eliminated by making one of the first 112 and second 114 links rigid in the pitch axis of the trailer.

In Figure 1, the first, third, and fourth connections 112, 122, and 124 have 3-axis range of rotation and are, for example ball joints. Advantageously, this allows a standard, central ball hitch to be used as the first connection 112. In this instance, the tow hitch 200 comprises a ball hitch 212 attached to the chassis of the vehicle 12. The third connection 122 is also shown as a ball joint and can be attached to the standard ball hitch 212, for example by connecting an arm from the stabiliser connection of the ball hitch 212, wherein said arm has a second ball hitch 222 attached thereto. The first and second links 110, 120, connect to the ball hitches 112, 122 in any well known manner and again, for brevity a description is omitted here.

As will be described herein, the second connection 114 includes a mechanism 300 that selectively couples the fourth connection to the trailer. That is, at relatively small turn angles between the tow vehicle and trailer, the fourth connection 122 is held fast to the trailer so its relative position is fixed to the trailer. However, as the angle of turn exceeds a preset angle, the fourth connection 122 is released from the fixed arrangement with the trailer and rotated about a yaw axis of the second connection 112. Here the configuration of the connections in terms of there relative locations are held constant, which allows steeper turn angles without the linkages jamming on each other.

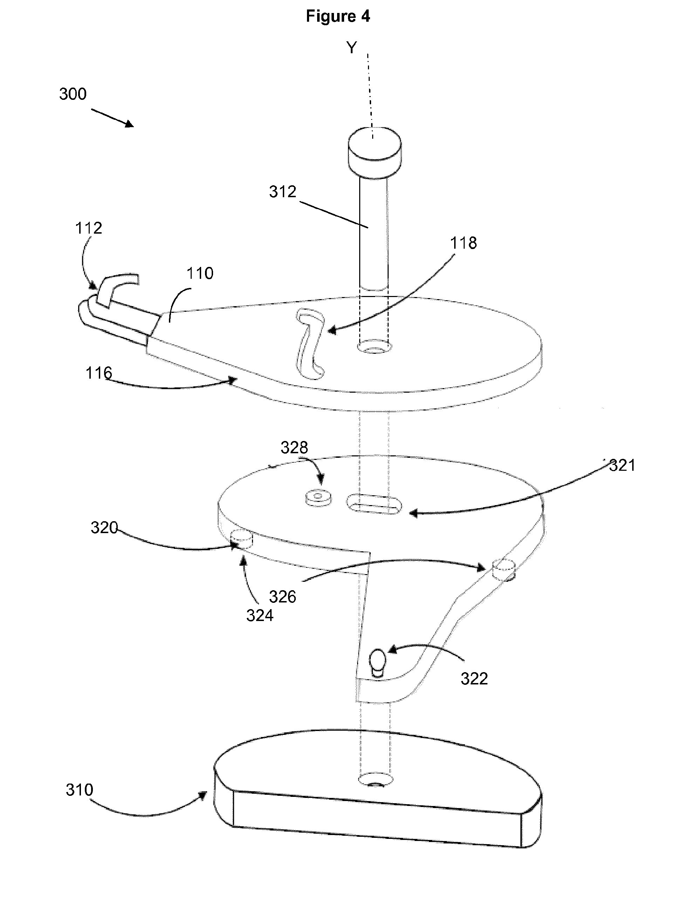

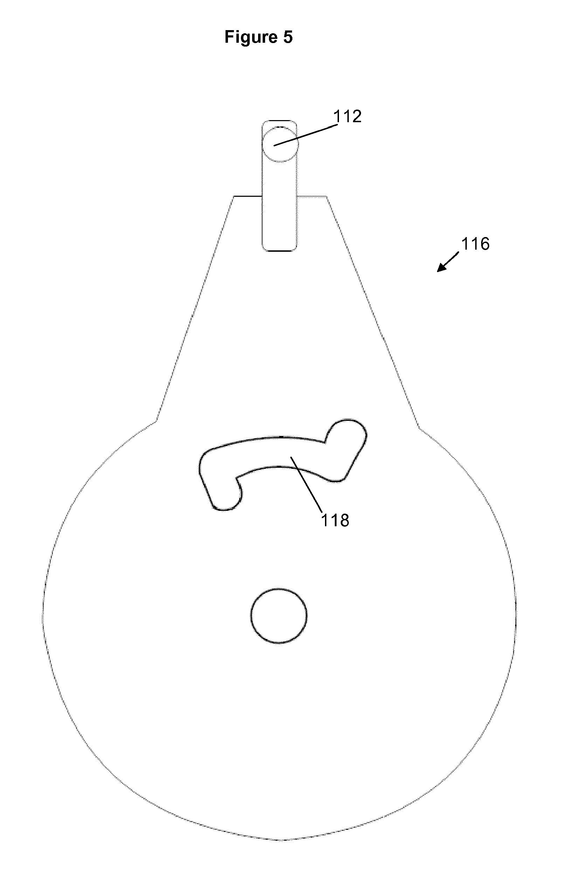

A number of alternatives for the mechanism 300 are envisaged. The principle being that the third connection is held rigid to the vehicle below a set turn angle and held rigid to the first link 110 above the preset turn angle. In Figure 4, an exemplary mechanism 300 is shown. Here, the first link 110 terminates at a plate 116. The plate 116 is arranged to rotate about a yaw axis Y. Fixed to the vehicle is a fixed plate 310. The plate 116 is arranged to rotate relative to the fixed plate, for instance by a rotation pin 312. An intermediate plate 320 is arranged between the first plate 116 and the fixed plate 310 wherein the pin 312 passes through the intermediate plate. The intermediate plate 320 includes a ball connection 322 for connecting to the second, offset link to form the fourth connection 122. Here the plate 320 forms an arm or third link between the second and fourth connections. The fixed plate includes a flat side. The intermediate plate includes two followers 324, 326 that in a small turn angle arrangement sit against the flat side of the fixed plate to prevent rotation about the pin 312. The first plate 116 selectively couples to the intermediate plate to cause the intermediate plate to shift laterally in a forward or aft direction to release one of the followers from engagement with the flat side of the fixed plate. At this point, the followers do not prevent rotation of the intermediate plate. It will be appreciated that the intermediate plate includes a slot within which the rotation pin 312 is located, said slot accommodating the lateral movement. In Figure 4, the first plate is selectively coupled to the intermediate plate by abutment between a follower 328 and groove 118. The follower is shown on the intermediate plate and the groove on first plate. However, it will be appreciated that this configuration could be swapped. The groove allows the follower to freely move as the first plate pivots about said preset small angle relative to the trailer, wherein the follower is fixed fast to the trailer by means of the intermediate plate being held fast to the trailer. Towards the end of either sideways turn, that is, as the turn angle approaches the preset angle, the groove restrains movement of the follower relative to the first plate. This restrainment causes the intermediate plate to shift forward or aft. It will be appreciated that this shifting releases the intermediate plate from being held fast to the fixed plate. During further rotation of the first plate, abutment of the follower and groove causes the first plate and intermediate plate to be locked together whereby the third link is caused to rotate about the yaw axis Y of the second connection. Exemplary examples of a suitable first plate 116, intermediate plate 320 and fixed plate 310 are shown in Figures 5, 6 and 7 respectively.

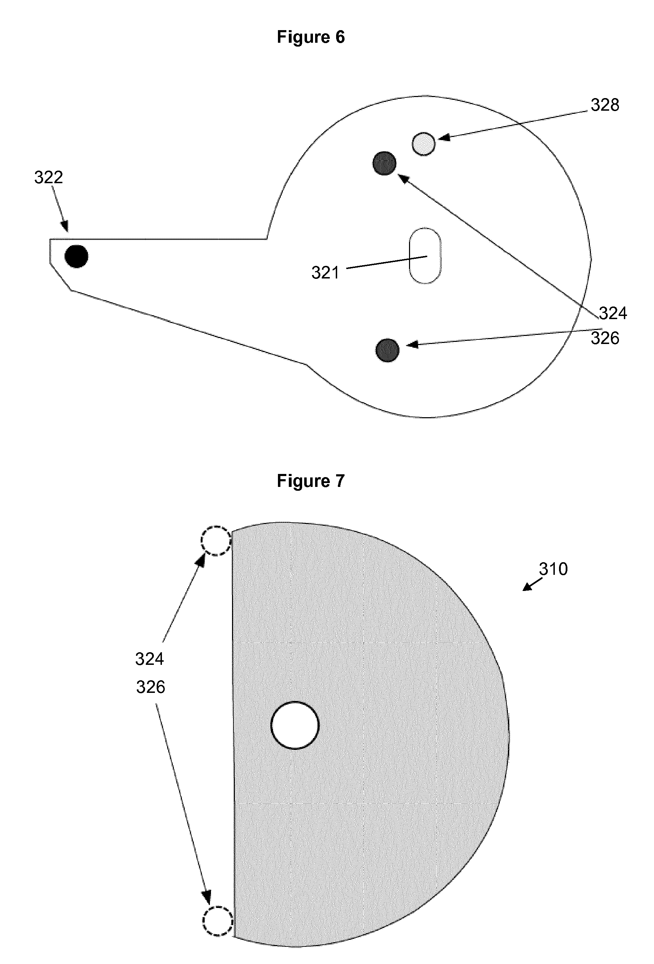

Operation of the towing system 10 for small turn angles is as follows and described with reference to Figures 1 and 2. In this mode of operation, the mechanism 300 allows free movement of plate 116, the main link to the centre hitch, around the vertical axis Y in the centre of the mechanism. As the offset link 120 is also free to move around its mounting point 124 on the trailer, a simple trapezium configuration is created, such that a turn to the left, as illustrated in Fig 1, causes the centre line of the trailer 14 to move left of the main tow-hitch 212, and align approximately with a point on the tow vehicle 10 well forward of this. By this means any lateral forces applied by the trailer to the tow vehicle do not substantially affect the direction of travel of the tow vehicle. The central section of the groove in the first plate 116 of Figs 4 and 5 follows a radius of the centre pin, so that as plate 116, which is fixed to the first link, is turned small angles either way, intermediate plate 320 of Fig 6 is kept in a position halfway between its most forward and most rearward positions, so cannot pivot because of the two followers touching the fixed plate 310 shown in Fig 7 remain in close contact with the straight section of this fixed plate.

For larger turn angles, the turn angle of plate 116 reaches a point where the follower 328 of plate 320 reaches the end of the groove in plate 116. Because the first plate 116 cannot rotate further, increased turning of the tow vehicle causes the offset link to apply a force to the end of the arm and move the entire intermediate plate 320 forwards or rearwards as appropriate. If the three followers are alternatively attached to the intermediate plate 320 on a separate assembly then the movement of this assembly is arranged to allow just the followers to move as required, but plate 320 to stay on a fixed centre. In either case the follower 328 of intermediate plate 320 enters the appropriate angled end of the groove of plate 116 thus effectively locking together plates 116 and 320, and one of the two followers 324, 326 leaves the straight section of the perimeter of the fixed plate. The intermediate plate 320 can now turn only in the same direction of turn as the tow vehicle, and so the assembly of plates 116 and 320 rotate in this direction locked together, enabling the tow vehicle to move to a ninety degree angle relative to the trailer. As the turn is reduced the sequence of operation is reversed, and similar operation is produced for turns in the opposite direction.

The relative positions of the connections 112, 114, 122, 124 can be re-arranged to suit the application. Particularly to place the effective pivot axis as far forward as required.

It will be appreciated that for clarity, some dimensions have been increased and items required to follow cam surfaces or slotted guides are shown as simple single rollers, but these can be double rollers incorporating arrangements to avoid backlash. Similarly also for clarity, pivot points are shown as simple plain bearings and the plates are shown to contact each other directly, but ball bearing arrangements could be used to reduce friction and durability at these points.

Although preferred embodiment(s) of the present invention have been shown and described, it will be appreciated by those skilled in the art that changes may be made without departing from the scope of the invention as defined in the claims.

## Claims

1. A hitch assembly comprising a tow hitch and trailer coupling that couple to attach a tow vehicle and trailer, the trailer coupling having a first link and a second link, wherein the first link is coupled to the tow hitch at a centre of the tow vehicle and to the centre of the trailer by first and second respective connections and the second link is coupled to the tow hitch and trailer offset from the first link by third and fourth respective connections, the first and third connections to the trailer hitch are spaced closer to each other than the second and forth connections to the trailer, wherein one of the first and second connections is rigid about at least a pitch axis.

2. The hitch assembly as claimed in claim 1, wherein said one of the first and second connections is also rigid about the roll axis.

3. The hitch assembly as claimed in any preceding claim, wherein the third connection is detachably mounted on the tow vehicle.

4. The hitch assembly as claimed in any preceding claim, wherein the first connection comprises a first part attached to the tow vehicle being a standard tow ball.

5. The hitch assembly as claimed in claims 3 and 4, wherein the third connection is detachably mounted to the standard tow ball.

6. The hitch assembly as claimed in any preceding claim, wherein the second and fourth connections are connected to the trailer via a mechanism, said mechanism being arranged to fix the fourth connection to the trailer when the relative angle between the tow vehicle and trailer is below a set turn angle and when the turn angle exceeds the first angle, the fourth connection is arranged so as to be moveable relative to the trailer.

7. A trailer coupling having a first and second link for attaching to a tow hitch in a trapezium configuration, wherein the first and second links are connected to said tow hitch at first and third respective connections and to a mechanism at second and fourth respective connections, said mechanism being arranged to fix the fourth connection to the trailer when the relative angle between the tow vehicle and trailer is below a set turn angle and when the turn angle exceeds the first angle, the fourth connection is arranged so as to be moveable relative to the trailer.

8. The trailer coupling of Claim 7, wherein the mechanism includes a third link and the third connection is formed between the second link and third link at a location spaced from the second connection.

9. The trailer coupling of claim 8, wherein the mechanism includes a selective coupling means that selectively locks the third link to the trailer when the turn angle is below the first angle, and allows the third link to rotate relative to the trailer when the turn angle exceeds the first angle.

10. The trailer coupling of Claim 8, wherein the mechanism includes a selective driving means that drives the third link to rotate, when not locked to the trailer.

11. The trailer coupling of any of Claims 7 to 10, used to form a hitch assembly as claimed in any of Claims 1 to 6.

12. The hitch assembly of any of Claim 1 to 6, including a trailer coupling as claimed in any of claims 8 to 10.

13. A towing system comprising a tow vehicle and a trailer connectable together via a hitch assembly, wherein the hitch assembly is as claimed in any of claims 1 to 6 and 12.

14. A trailer including a trailer coupling, wherein the trailer coupling is as claimed in any of claims 7 to 11.

15. A method of stabilising a towing system, the method comprising connecting a first coupling part of a trailer to a respective coupling part of the tow vehicle to form a first connection and attaching a third connection to the tow vehicle, wherein the towing system is as claimed in claim 13.
